# EUROPÄISCHE PATENTSCHRIFT

(11) **EP 0 882 405 B1**
(45) Veröffentlichungstag und Bekanntmachung des Hinweises auf die Patenterteilung: **12.12.2001**
(21) Anmeldenummer: 98108082.3
(22) Anmeldetag: 04.05.1998
(51) Int. Cl.: A22C 21/00

(54) **Schäkelvorrichtung zur Halterung von Geflügel**
Shackle for supporting poultry bodies
Crochet de suspension de corps de volailles

(30) Priorität: 05.06.1997 DE 19723571
(43) Veröffentlichungstag der Anmeldung: 09.12.1998
(73) Patentinhaber: NORDISCHER MASCHINENBAU RUD. BAADER GMBH + CO KG, 23560 Lübeck (DE)
(72) Erfinder: Mente, Mathias, 23558 Lübeck (DE)
(74) Vertreter: Patentanwälte Wenzel & Kalkoff

(56) Entgegenhaltungen:
- EP-A- 0 086 700
- EP-A- 0 381 093
- EP-A- 0 444 782
- FR-A- 2 589 452
- US-A- 2 557 707
- US-A- 3 518 717
- US-A- 4 213 229
- US-A- 5 487 700

## Beschreibung

Die Erfindung betrifft eine Vorrichtung zur Halterung von Geflügelkörpern zwecks deren Bearbeitung, umfassend einen angetriebenen Hängeförderer zur Förderung der Geflügelkörper längs einem vorbestimmten Förderpfad mit einer Vielzahl von an dem Hängeförderer hängend und um einen im wesentlichen senkrechten Schäkelschaft drehbar angeordneten Schäkeln mit Mitteln zur Halterung der Geflügelkörper und weiter umfassend längs des Förderpfades stationär angeordnete Steuermittel, die mit Eingriffmitteln an dem Schäkelschaft jedes Schäkels und dabei eine Drehbewegung desselben bewirkend in Verbindung treten.

Derartige Schäkelvorrichtungen werden in automatischen Geflügel-Bearbeitungsmaschinen eingesetzt, in denen Geflügelkörper einzeln durch Bearbeitungsstationen geführt werden. Dazu wird jeder Geflügelkörper mit den Knöchelgelenken in die Schäkel eingehängt, so daß die Geflügelkörper mit den Beinen nach oben hängend gehalten sind. Insbesondere beim Zerteilen der Geflügelkörper zwecks Herstellung konsumgerechter Stücke, wie beispielsweise Hälften, Beine, Flügel etc. kommen drehbare Schäkel zur Anwendung, da auf diese Weise aus der Förderbewegung heraus Bearbeitungsvorgänge in verschiedenen Körperebenen durchgeführt werden können.

Aus der EP 0 444 782 A1 ist eine Schäkelvorrichtung bekannt, bei der der Schäkel drehbar ist. Der an einem Förderer befestigte Schäkel ist zu diesem Zweck an einer senkrechten Drehachse mit einer Kurvenplatte versehen, die im Verlauf der Förderung mit einem stationären Kurvenelement in Verbindung tritt und den Schäkel veranlaßt, um 90° zu schwenken. Sowohl die Originalstellung, als auch die 90°-Drehstellung werden durch eine Kugelraste arretiert.

Bei dieser Vorrichtung ist nachteilig, daß der Schwenkvorgang nicht ruck- und stoßfrei verläuft, was bei den angestrebten Verarbeitungs-Geschwindigkeiten zu unkontrollierten Pendel- und Drehbewegungen führt, die die Bearbeitung beeinträchtigen. Ursache dafür sind die hohe Anfangs-Drehbeschleunigung des Schäkels sowie das erforderliche erhöhte Drehmoment zur Überwindung des Widerstandes der Dreh-Arretierung.

Es ist die Aufgabe der Erfindung, eine Schäkelvorrichtung mit einem drehbaren Schäkel anzugeben, dessen Drehung auch bei hoher Fördergeschwindigkeit stoßfrei und präzise durchführbar ist. Gleichzeitig soll ermöglicht werden, die Drehbewegung der Schäkel beliebig sowohl in als auch gegen den Uhrzeigersinn vorzusehen und die jeweils erreichte Drehstellung sicher zu fixieren. Darüber hinaus soll die Schäkelvorrichtung unter vergleichsweise geringem Aufwand herstellbar und leicht in vorhandene Geflügelverarbeitungslinien integrierbar sein.

Diese Aufgabe wird bei einer Schäkelvorrichtung der eingangs genannten Art dadurch gelöst, daß die Eingriffmittel ein an dem Schäkelschaft kragenförmig angeordnetes Plattenelement mit Mitnehmern umfassen, die auf einem zu dem Schäkelschaft konzentrischen Kreis unter gleicher Teilung und in gleicher Anzahl von der Unterseite und von der Oberseite des Plattenelementes aufragen, wobei ihre Anordnung so getroffen ist, daß die Mitnehmer der Oberseite gegenüber denjenigen der Unterseite um eine halbe Teilung versetzt angeordnet sind und daß die Steuermittel ein Paar kongruenter Kurvenelemente je mit einer Stirnkurve umfassen, die seitlich des Förderpfades und gegensinnig spiegelgleich unmittelbar oberhalb bzw. unterhalb der Bahn des Plattenelementes angeordnet sind, und jeweils im wesentlichen gleichzeitig mit einem Mitnehmer der Oberseite und dem in Drehrichtung des Schäkels nächstfolgenden Mitnehmer der Unterseite in Kontakt treten.

Eine derartige Ausführung hat eine Reihe von Vorteilen. So ist es möglich, die Drehbewegung des Schäkels unter geringer Drehbescheunigung einzuleiten und zu vollenden und dabei eine Zwangsführung zu bewirken, die die Gefahr einer Überdrehung ausschließt. Weiter ermöglicht die Verwendung gegensinnig spiegelgleicher Kurvenelemente deren Fertigung aus einer vorzugsweise rechteckigen Platte durch einen einzigen Trennschnitt, der den Verlauf der Stirnkurve jeweils der beiden einander zugehörigen Kurvenelemente bestimmt.

Um einen verschleißarmen Betrieb zu ermöglichen, können die mit den Kurvenelementen in Kontakt tretenden Mitnehmer als Stifte mit einer Rollhülse ausgebildet sein, so daß die Berührung zwischen Kurvenelement und Mitnehmer als Rollbewegung abläuft.

Zur Fixierung der jeweils erreichten Winkelstellung der Schäkel ist das Plattenelement als regelmäßiges, geradzahliges Vieleck ausgebildet, das vor und hinter den Schwenkstationen an gegenüberliegenden Umfangsflächen zwischen parallelen Leitflächen geführt ist. Dabei ist Funktionsvoraussetzung, daß die Zahl der Umfangsflächen der Gesamtzahl der Mitnehmer eines Plattenelementes entspricht und jeder Mitnehmer auf der Symmetrielinie eines Vielecksegmentes plaziert ist. Im konkreten Fall heißt das, daß beispielsweise ein Plattenelement mit vier Mitnehmern quadratförmig ausgebildet ist, wobei je zwei einander gegenüberliegende, d. h. um 180° versetzt angeordnete Mitnehmer auf der Oberseite und um 90° versetzt dazu auf der Unterseite des Plattenelementes vorgesehen sind.

Die Erfindung ist nachstehend anhand eines in der Zeichnung dargestellten Ausführungsbeispiels näher erläutert. Es zeigt
- Fig. 1: eine ausschnittweise Seitenansicht einer Geflügel-Bearbeitungsmaschine,
- Fig. 2: eine Draufsicht auf die Maschine nach Fig. 1 im Bereich einer Schäkel-Drehstation,
- Fig. 3: einen Querschnitt durch die Maschine nach Fig. 1 im Bereich einer Schäkel-Drehstation,
- Fig. 4: für unterschiedliche Drehwinkel vorgesehene alternative
- Fig. 5: Ausführungen der Drehstation.

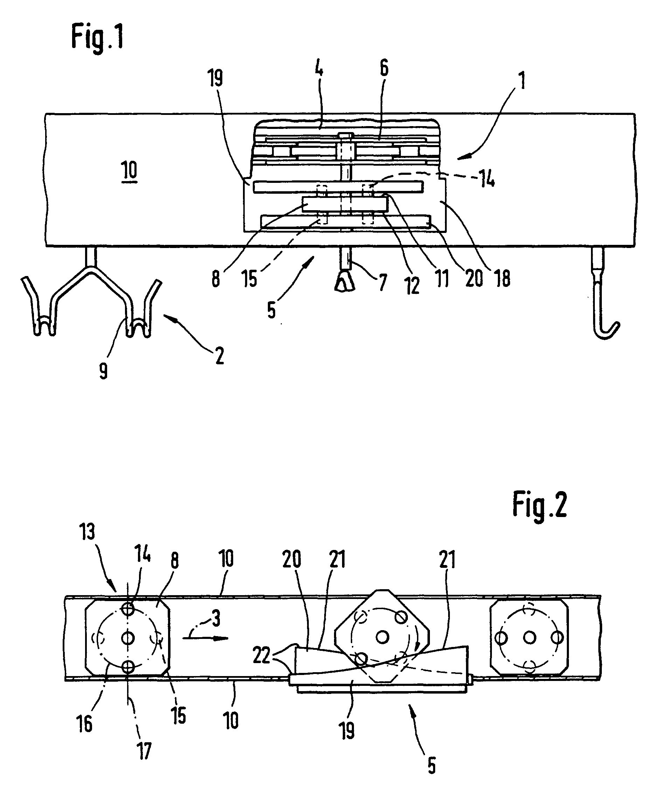

Fig. 1 zeigt einen Ausschnitt aus einer üblichen, in einem nicht gezeigten Gestell installierten Geflügel-Bearbeitungsmaschine mit einem Hängeförderer 1, der mit Schäkelvorrichtungen 2 versehen ist, die einem durch nicht gezeigte Umlenkräder und nur teilweise dargestellte Führungsmittel 4 bestimmten Förderpfad 3 folgen, in dessen Verlauf Drehstationen 5 zum Verdrehen der Schäkelvorrichtungen 2 vorgesehen sind.

Der Hängeförderer 1 umfaßt eine endlose Laschenkette 6 , die auf geeignete Weise angetrieben in horizontaler Ebene umläuft und in der die Schäkelvorrichtungen 2 verankert sind. Dabei weist jede Schäkelvorrichtung 2 einen Schäkelschaft 7 auf, der in der Laschenkette 6 drehbar gelagert und an seinem unteren Ende mit einem Schäkel 9 zur Halterung der Geflügelkörper an ihren Beinen versehen ist. An dem Schäkelschaft 7 ist ein kragenförmiges Plattenelement 8 befestigt, das entsprechend Fig. 2 von quadratischer Gestalt ist und zwischen gestellfesten, zueinander parallelen Leitflächen 10 geführt ist, die sich längs des Förderpfades 3 erstrecken. Das Plattenelement 8 ist entsprechend Fig. 2 mit je zwei aus seiner Ober- und Unterseite 11 bzw. 12 aufragenden als Mitnehmer 13 wirksamen Stiften 14 und 15 versehen. Die Stifte sind jeweils auf einem zu dem Schäkelschaft 7 konzentrischen Teilkreis 16 und einer Symmetrielinie 17 angeordnet, die zwischen einander gegenüberliegenden Umfangseiten und parallel zu diesen verläuft. Dabei sind die Stifte 14 und 15 der Ober- und Unterseite 11 bzw. 12 gegeneinander um 90° versetzt.

Eine Drehstation 5 ist durch eine Unterbrechung 18 der Leitflächen 10 gekennzeichnet, in der jeweils zwei Kurvenelemente 19 und 20 mit Stirnkurven 21 gestellfest angebracht sind. Die Stirnkurven 21 sind identisch und folgen beispielsweise dem Verlauf einer Sinuslinie im zweiten und dritten Quadranten, deren Amplitude dem Radius des Teilkreises 16 entspricht. Die Kurvenelemente 19 und 20 sind gegensinnig symmetrisch und um ca. 15 mm längsversetzt und in einem Abstand übereinander angeordnet, so daß sich das Kurvenelement 19 in der Bahn der Stifte 14 und das Kurvenelement 20 in der Bahn der Stifte 15 erstreckt. Dabei sind die Kurvenelemente 19 und 20 so angebracht, daß ihre Stirnkurven 21 in die Bahn der Stifte 14 bzw. 15 hineinragen. Jeweils im Auflaufbereich weisen die Stirnkurven 21 Auflaufschrägen 22 auf.

Der Funktionsablauf wird nachstehend anhand der Figuren 1 und 2 beschrieben:
Beispielsweise aus der Beladestation einer Geflügel-Bearbeitungslinie kommend wird die Schäkelvorrichtung 2 in einer Drehstellung gehalten, in der der Schäkel 9 so geführt ist, daß die die Beine der Geflügelkörper aufnehmenden Halterungen in Förderrichtung hintereinander angeordnet sind. Für die Einhaltung dieser Stellung sorgen die Leitflächen 10 , zwischen denen das mit dem Schäkelschaft 7 verbundene Plattenelement 8 geführt ist. In dem dargestellten Falle sind dabei die Stifte 14 auf der Oberseite 11 des Plattenelementes 8 auf einer Linie quer zur Förderrichtung und folglich die Stifte 15 auf der Unterseite 12 auf einer Linie längs zur Förderrichtung angeordnet. So ausgerichtet erreicht die Schäkelvorrichtung 2 eine erste Drehstation 5 , nachdem beispielsweise eine Querbearbeitung in Form eines Fronthalf-Vorschnittes erfolgte. Bei der bezeichneten Konstellation ist das obere Kurvenelement 19 so angeordnet, daß der diesem zuweisende Stift 14 die Stirnkurve 21 eingangsseitig tangiert und an dieser entlang zu gleiten beginnt. Unmittelbar darauf tritt das untere Kurvenelement 20 mit dem vorauslaufenden Stift 15 in Kontakt, so daß das Kurvenelement 19 als Führungskurve und das untere Kurvenelement 20 als Anlagekurve dient, d. h. eine Zwangsführung stattfindet, in der jeweils zwei Stifte im Eingriff stehen. Auf diese Weise erfolgt im Laufe der Förderung eine stoßfreie 90°- Drehung des Schäkels 9 , deren Beschleunigungsprofil durch die Auswahl des Kurvenverlaufs individuell vorgebbar ist. Dem vollzogenen Drehschritt können in nachfolgenden, nicht gezeigten weiteren Drehstationen weitere Drehschritte folgen, die je nach Anordnung der Kurvenelemente 19 und 20 rechts oder links des Förderpfades 3 fortlaufend in oder rückläufig gegen den Uhrzeigersinn ablaufen können.

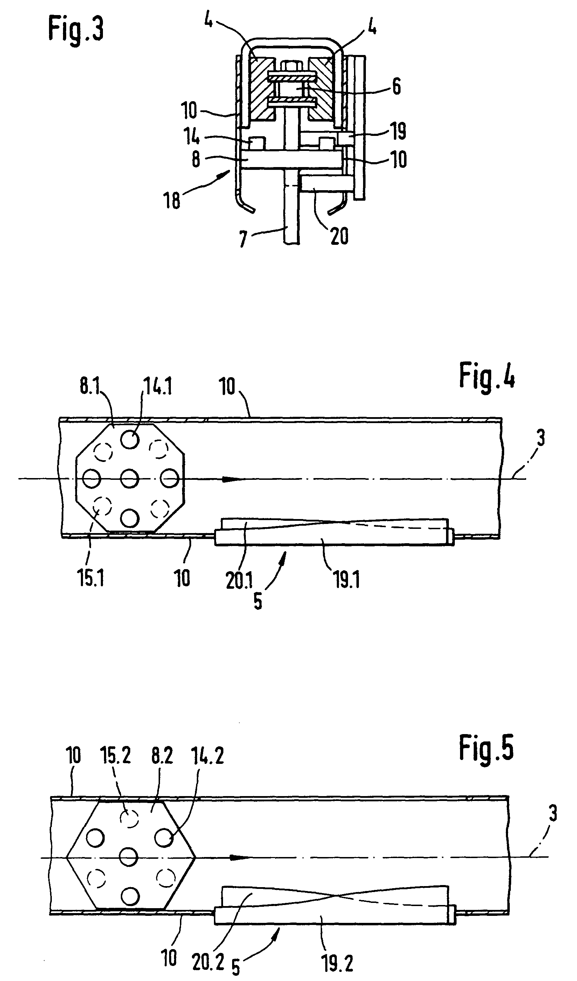

Mit den Ausführungen nach Figuren 4 und 5 können nach dem gleichen Funktionsprinzip Drehschritte von 45° bzw. 60° erreicht werden. Dabei sind die jeweils zugehörigen Kurvenelemente 19.1 und 20.1 bzw. 19.2 und 20.2 so ausgeführt, daß ihre Stirnkurven 21.1 bzw. 21.2 der besagten Sinuslinie folgen, deren Amplituden dann 0,293 bzw. 0,5 mal Radius des Teilkreises 16 entsprechen. In Zuordnung dazu haben die entsprechenden Plattenelemente 8.1 bzw. 8.2 die Gestalt eines regelmäßigen Achtecks bzw. Sechsecks mit vier und vier bzw. drei und drei Stiften 14.1 und 15.1 bzw. 14.2 und 15.2 in einer Anordnung, wie oben in Verbindung mit dem Plattenelement 8 beschrieben.

Aufgrund der Zwangsführung während des Drehvorganges kann jede Drehstation 15 einem Bearbeitungswerkzeug so zugeordnet sein, daß die Drehung der Schäkel 9 während der Bearbeitung des Geflügelkörpers erfolgt. Dabei ist es möglich, das Profil der Drehbewegung durch entsprechende Auswahl des Verlaufs der Stirnkurven 21 der Kurvenelemente 19 und 20 weitgehend beliebig zu gestalten.

### Bezugszeichenliste

- 1: Hängeförderer
- 2: Schäkelvorrichtung
- 3: Förderpfad
- 4: Führungsmittel
- 5: Drehstation
- 6: Laschenkette
- 7: Schäkelschaft
- 8: Plattenelement
- 8.1: " "
- 8.2: " "
- 9: Schäkel
- 10: Leitfläche
- 11: Oberseite
- 12: Unterseite
- 13: Mitnehmer
- 14: Stift (oben)
- 14.1: " "
- 14.2: " "
- 15: Stift (unten)
- 15.1: " "
- 15.2: " "
- 16: Teilkreis
- 17: Symmetrielinie
- 18: Unterbrechung
- 19: Kurvenelement (oben)
- 19.1: " "
- 19.2: " "
- 20: Kurvenelement (unten)
- 20.1: " "
- 20.2: " "
- 21: Stirnkurve
- 22: Auflaufschräge

## Patentansprüche

1. Vorrichtung zur Halterung von Geflügelkörpern zwecks deren Bearbeitung, umfassend einen angetriebenen Hängeförderer (1) zur Förderung der Geflügelkörper längs einem vorbestimmten Förderpfad (3) mit einer Vielzahl von an dem Hängeförderer hängend und um einen im wesentlichen senkrechten Schäkelschaft (7) drehbar angeordneten Schäkeln (9) mit Mitteln zur Halterung der Geflügelkörper und weiter umfassend längs des Förderpfades stationär angeordnete Steuermittel, die mit Eingriffmitteln an dem Schäkelschaft jedes Schäkels und dabei eine Drehbewegung desselben bewirkend in Verbindung treten,
**dadurch gekennzeichnet,**
**daß** die Eingriffmittel ein an dem Schäkelschaft (7) kragenförmig angeordnetes Plattenelement (8, 8.1, 8.2) mit Mitnehmern (13) umfassen, die auf einem zu dem Schäkelschaft konzentrischen Kreis unter gleicher Teilung und in gleicher Anzahl von der Unterseite (12) und von der Oberseite (11) des Plattenelementes aufragen, wobei ihre Anordnung so getroffen ist, daß die Mitnehmer der Oberseite gegenüber denjenigen der Unterseite um eine halbe Teilung versetzt angeordnet sind und
**daß** die Steuermittel ein Paar kongruenter Kurvenelemente (19/20, 19,1/20.1, 19.2/20.2) je mit einer Stirnkurve (21) umfassen, die seitlich des Förderpfades (3) und gegensinnig spiegelgleich unmittelbar oberhalb bzw. unterhalb der Bahn des Plattenelementes (8, 8.1, 8.2) angeordnet sind, und jeweils im wesentlichen gleichzeitig mit einem Mitnehmer der Oberseite und dem in Drehrichtung des Schäkels (9) nächstfolgenden Mitnehmer der Unterseite in Kontakt treten.

2. Vorrichtung nach Anspruch 1 , **dadurch gekennzeichnet, daß** die Mitnehmer (13) durch Stifte (14/ 15, 14,1/ 15,1, 14.2/15.2) gebildet sind.

3. Vorrichtung nach Anspruch 1 oder 2, **dadurch gekennzeichnet, daß** jeder Stift (14/15, 14.1/15.1, 14.2/15.2) einer Rollhülse als Achse dient.

4. Vorrichtung nach einem der Ansprüche 1 bis 3 , **dadurch gekennzeichnet, daß** das Plattenelement (8, 8.1, 8.2) die Umfangskontur eines regelmäßigen, geradzahligen Vielecks hat, wobei die Zahl der Umfangsflächen der Gesamtzahl der Mitnehmer (13) eines Plattenelementes entspricht und wobei jeder Mitnehmer auf der Symmetrielinie (17) eines Vielecksegmentes plaziert ist.

5. Vorrichtung nach Anspruch 4, **dadurch gekennzeichnet, daß** die Plattenelemente (8, 8.1, 8.2) der Schäkel (9) zwischen zu beiden Seiten des Förderpfades und zueinander parallel verlaufenden stationären Leitflächen (10) geführt sind.

6. Vorrichtung nach Anspruch 5, **dadurch gekennzeichnet, daß** die Leitflächen (10) Unterbrechungen (18) aufweisen, in denen die Steuermittel angeordnet sind.

## Claims

1. A device for holding poultry carcasses for the purpose of processing them, comprising a driven suspension conveyor (1) for conveying the poultry carcasses along a predetermined conveyance path (3) with a plurality of shackles with means for holding/supporting the poultry carcass, the shackles arranged suspended from the suspension conveyor and rotatable about an essentially vertical shackle shaft (7), and further comprising control means arranged stationary along the conveyance path which enter into connection with engaging means on the shackle shaft of each shackle bringing about a rotational motion thereof in the process,
**characterised in**
**that** the engaging means comprise a plate element (8, 8.1, 8.2) positioned at the shackle shaft (7) in the shape of a collar with tappets (13), the tappets projecting on a circle concentric with the shackle shaft at an equal division and in an equal number from the bottom side (12) and the top side (11) of the plate element, the tappets having an arrangement which is chosen such that the tappets of the top side are arranged offset by half a division from those of the bottom side, and
**that** the control means comprise a pair of congruent cam elements (19/20, 19.1/20.1, 19.2/20.2), each having an end-face cam (21) and being arranged at the sides of the conveyance path (3) and oppositely mirror-symmetrical directly above and below the path of the plate element (8, 8.1, 8.2) and each entering into contact essentially simultaneously with a tappet of the top side and the next succesive tappet of the bottom side in the rotational direction of the shackle (9).

2. A device according to claim 1, **characterised in that** the tappets (13) are formed by pins (14/15, 14.1/15.1, 14.2/15.2).

3. A device according to claim 1 or 2, **characterised in that** each pin (14/15, 14.1/15.1, 14.2/15.2) serves as the shaft for a rolling sleeve.

4. A device according to any one of claims 1 to 3, **characterised in that** the plate element (8, 8.1, 8.2) has the contour of a regular polygon with an even number of sides, the number of peripheral surfaces corresponding to the total number of tappets (13) of a plate element and each tappet being placed on the line of symmetry of a polygon segment.

5. A device according to claim 2, **characterised in that** the plate elements (8, 8.1, 8.2) of the shackles (9) are guided between stationary guide surfaces (10) running on both sides of the conveyance path and mutually parallel.

6. A device according to claim 5, **characterised in that** the guide surfaces (10) have interruptions (18) in which the control means are arranged.

## Revendications

1. Appareillage pour supporter des corps de volaille pour permettre leur transformation, comprenant un transporteur suspendu et mené (1), destiné à transporter les corps de volaille le long d'un trajet de transport (3) prédéfini, comportant un grand nombre de manilles (9), suspendues au transporteur suspendu, et disposées de façon à pouvoir tourner autour d'un arbre de manille (7), essentiellement vertical, les manilles comportant des moyens pour maintenir en place les corps de volaille, et comportant en outre des organes de commande, disposés en position fixe le long du trajet de transport, organes de commande qui entrent en liaison avec des moyens de prise sur l'arbre de chaque manille, en en provoquant un mouvement de rotation, **caractérisé en ce que** les moyens de prise comportent un élément en plaque (8, 8.1, 8.2), disposé en forme de collerette contre l'arbre de manille (7) et comportant des entraîneurs (13), qui sur un cercle concentrique à l'arbre de manille dépassent avec le même pas et en le même nombre, de la face inférieure (12) et de la face supérieure (11) de l'élément en plaque, leur disposition étant telle que les entraîneurs de la face supérieure soient disposés d'une manière décalée d'un demi-pas par rapport à ceux de la face inférieure, et **en ce que** les organes de commande comportent une paire d'éléments congruents formant came (19/20, 19.1/20.1, 19.2/20.2) ayant chacun une came frontale (21), qui sont disposés latéralement par rapport au trajet de transport (3), et symétriques l'un par rapport à l'autre immédiatement au-dessus et au-dessous de la voie de l'élément en plaque (8, 8.1, 8.2), et dont chacun entre en contact, d'une manière essentiellement simultanée, avec un entraîneur de la face supérieure et avec l'entraîneur de la face inférieure, qui le suit dans le sens de rotation de la manille (9).

2. Appareillage selon la revendication 1, **caractérisé en ce que** les entraîneurs (13) sont formés par des goupilles (14/15, 14.1/15.1, 14.2/15.2).

3. Appareillage selon la revendication 1 ou 2, **caractérisé en ce que** chaque cheville (14/15, 14.1/15.1, 14.2/15.2) sert d'axe à un manchon de roulement.

4. Appareillage selon l'une des revendications 1 à 3, **caractérisé en ce que** l'élément en plaque (8, 8.1, 8.2) a le contour périphérique d'un polygone régulier à nombre pair de côtés, le nombre des surfaces périphériques correspondant au nombre total des entraîneurs (13) d'un élément en plaque, et chaque entraîneur étant placé sur l'axe de symétrie (17) d'un segment polygonal.

5. Appareillage selon la revendication 4, **caractérisé en ce que** les éléments en plaque (8, 8.1, 8.2) des manilles (9) sont guidés entre des surfaces de guidage (10), stationnaires, courant parallèlement aux deux côtés du trajet de transport et parallèlement l'une à l'autre.

6. Appareillage selon la revendication 5, **caractérisé en ce que** les surfaces de guidage (10) comportent des interruptions (18) dans lesquelles sont disposés les organes de commande.
